# EUROPÄISCHE PATENTSCHRIFT

(11) **EP 3 724 042 B1**
(45) Veröffentlichungstag und Bekanntmachung des Hinweises auf die Patenterteilung: **10.11.2021**
(21) Anmeldenummer: 18779202.3
(22) Anmeldetag: 06.09.2018
(51) Int. Cl.: B60T 8/36, F16K 7/17

(54) **MEMBRANVENTILANORDNUNG FÜR EINE DRUCKLUFTBREMSANLAGE**
MEMBRANE VALVE ASSEMBLY FOR A COMPRESSED AIR BRAKING SYSTEM
ARRANGEMENT DE VANNES À MEMBRANE POUR UN SYSTÈME DE FREINAGE À AIR COMPRIMÉ

(30) Priorität: 15.12.2017 DE 102017011607
(43) Veröffentlichungstag der Anmeldung: 21.10.2020
(73) Patentinhaber: ZF CV Systems Europe BV, 1170 Brussels (BE)
(72) Erfinder: BIALON, Rafal, 55-200 Olawa (PL); EISFELDER, Stephan, "verstorben" (DE); KACKI, Damian, 53238 Wroclaw (PL)
(74) Vertreter: Rabe, Dirk-Heinrich
(86) Internationale Anmeldenummer: PCT/EP2018/073971
(87) Internationale Veröffentlichungsnummer: WO 2019/115027

(56) Entgegenhaltungen:
- DE-A1-102015 016 265
- DE-U1-202011 004 671
- US-A1- 2013 014 639
- US-A1- 2013 298 758

## Beschreibung

Die Erfindung betrifft eine Membranventilanordnung gemäß dem Oberbegriff des Anspruchs 1.

Eine derartige Membranventilanordnung ist aus der Fig. 4 der DE 10 2015 016 265 A1 bekannt. In der Ausführungsform zur Fixierung der Membran eines Membranventils sind die Seitenwände und der Boden der Ringnut in der Zwischenplatte angeordnet. Die radialen Seitenwände der Ringnut und die entsprechenden Außenwände des Ringwulstes der Membran sind axial in Richtung zu der Zwischenplatte konvergent geneigt. Zur Bildung einer ringförmig umlaufenden Ausnehmung übersteigt die axiale Tiefe der Ringnut die axiale Höhe des Ringwulstes der Membran. Durch die keilförmige Ausbildung der Ringnut und des Ringwulstes wird die Einspannung der Membran zwischen den Gehäuseteilen verstärkt sowie überschüssiges Wulstmaterial der Membran in die bodenseitige Ausnehmung gedrückt. Zur Bildung einer zusätzlichen umlaufenden Ausnehmung zur Aufnahme von Wulstmaterial der Membran, weist das das Basisgehäuse eine einfach abgestufte Randnut auf, in deren radial inneren Nutabschnitt die Stützscheibe der Membran eingesetzt ist, und deren radial äußerer Nutabschnitt unter Einschluss der zusätzlichen ringförmig umlaufenden Ausnehmung einen axialen Abschnitt der Zwischenplatte nahe der Ringnut radial umgreift.

Aus der DE 21 36 446 A1 ist eine weitere Membranventilanordnung bekannt. Der Dichtungswulst ist dabei in einer von einem Gehäuseoberteil und einem Gehäuseunterteil gebildeten Ringnut aufgenommen. Die Dichtungsmembran wird dabei zwischen dem Gehäuseoberteil und dem Gehäuseunterteil bis zu ihrem äußeren Rand von einer Scheibe unterstützt. Der Dichtungswulst der Dichtungsmembran ist auf der von der Scheibe abgewandten Seite ausgebildet und füllt die Ringnut vollständig aus. Die Bearbeitungstoleranzen bei der Herstellung der Ringnut führen dazu, dass der Dichtungswulst zwar in der gewünschten Weise in der Ringnut mit einer vorgegebenen Klemmkraft eingespannt ist, welche für eine dauerhafte Dichtwirkung genau richtig ist und nicht zu einer Verhärtung des elastischen Werkstoffs der Dichtungsmembran führt, jedoch kann auch der Fall eintreten, dass die Dichtwirkung nicht ausreicht, oder dass der Dichtungswulst zu stark durch die Klemmkraft gepresst wird und im Dauerbetrieb eine die Dichtungsmembran beschädigende Verhärtung erleidet.

Eine weitere Membranventilanordnung wird in der unveröffentlichten DE 10 2016 009 402.8 beschrieben.

Dabei weist die Ventilmembran an ihrer scheibenfernen Seite radial außen einen umlaufenden Dichtungswulst auf, wobei die Scheibe zusammen mit der Ventilmembran zwischen einem Gehäuseoberteil und einem Gehäuseunterteil der Membranventilanordnung angeordnet ist, und bei dem der Dichtungswulst zwischen dem Gehäuseoberteil und dem Gehäuseunterteil eingespannt ist. Zudem sind am Gehäuseoberteil und/oder am Gehäuseunterteil im Bereich des Dichtungswulstes und/oder im radial äußeren Randbereich der die Ventilmembran unterstützenden Scheibe zusätzliche Dichtungsanordnungen vorhanden.

Die zusätzlichen Dichtungsanordnungen sind so gestaltet, dass deren Dichtwirkung weitgehend unabhängig von Fertigungstoleranzen und der wirkenden Klemmkraft zwischen dem Gehäuseoberteil und dem Gehäuseunterteil ist. Allerdings können die Fertigungstoleranzen nicht in jedem Fall durch zusätzliche Dichtungsanordnungen kompensiert werden, weshalb weiterhin die Dichtungswulst zu stark durch die Klemmkraft gepresst wird und im Dauerbetrieb eine die Dichtungsmembran beschädigende Verhärtung erleidet.

Vor diesem Hintergrund liegt der Erfindung die Aufgabe zugrunde, eine Membranventilanordnung vorzuschlagen, welche unabhängig von Fertigungstoleranzen ist und eine verbesserte Beständigkeit der Dichtungswulst aufweist.

Die Aufgabe wird erfindungsgemäß dadurch gelöst, dass eine Dichtungswulst einer Ventilmembran in eine Ringnut aufgenommen ist, welche durch eine L-förmige Aussparung im Gehäuseoberteil und einem diesen radial umfassenden, ringförmigen, radialen Vorsprung des Gehäuseunterteils gebildet ist und die Ventilmembran zwischen dem Gehäuseoberteil und der Scheibe (14, 114) gehalten ist.

Die Aufnahme der Dichtungswulst der Ventilmembran in einer Ringnut verringert die aufzuwendende Klemmkraft der Membranventilanordnung zum Verspannen der Dichtungswulst mit dem Gehäuseoberteil und einem Gehäuseunterteil.

Erfindungsgemäß weist außerdem die Scheibe radial in Richtung der Ventilmembran einen Vorsprung zum Verspannen der Ventilmembran zwischen dem Gehäuseoberteil und der Scheibe auf. Der Vorsprung ist an dem gegenüberliegenden Ende einer zentrischen Durchbrechung der Scheibe ausgebildet. Zudem stützt sich der Vorsprung axial und radial an einer Aussparung des Gehäuseunterteils ab. Der Vorsprung stellt gegenüber einer ebenen Fläche des Gehäuseunterteils, an der sich die Dichtungswulst abstützt, einen Absatz dar. Genauer gesagt, stellt die ebene Fläche des Gehäuseunterteils eine erste Ebene und eine ebene Fläche des Vorsprungs, an der sich die Ventilmembran abstützt, eine zweite Ebene dar. Dadurch verlagert sich ein Großteil der Spannkraft der Dichtungswulst in Richtung des Teilabschnitts der Ventilmembran, welche zwischen dem Vorsprung und des Gehäuseoberteils eingespannt ist.

Zudem weist der ringförmige, radiale Vorsprung des Gehäuseunterteils in einer weiteren vorteilhaften Ausgestaltung, wenigstens eine axiale Ringfläche sowie eine radiale Ringfläche auf, sodass der radiale Vorsprung des Gehäuseunterteils im Bereich der axialen Ringfläche einen Aufnahmeraum bildet, welcher ohne radiale Krafteinwirkung auf das Gehäuseoberteil und/oder das Gehäuseunterteil von dem Dichtungswulst nicht ausgefüllt ist, und dass nach dem Verspannen des Gehäuseoberteils gegen das Gehäuseunterteil in den Aufnahmeraum verdrängter elastischer Werkstoff des Dichtungswulstes der Ventilmembran angeordnet ist, wobei der Aufnahmeraum und der dort hinein verdrängte Werkstoff des Dichtungswulstes eine zusätzliche axiale Dichtungsanordnung bilden. Der Aufnahmeraum ist demnach dazu ausgebildet, der Dichtungswulst bei einer radialen Krafteinwirkung auf das Gehäuseoberteils und/oder das Gehäuseunterteils genügend Spielraum der Dichtungswulst zu geben, damit die Dichtungswulst nicht beschädigt wird oder sich im Bereich des Gehäuseoberteils und/oder das Gehäuseunterteils verklemmen kann.

In einer weiteren Ausführung ist der Vorsprung dazu ausgebildet, die Ventilmembran, während der Montage der Ventilmembran, in die Membranventilanordnung zu führen. Dadurch ist die Ventilmembran während der Montage nach ihrem Einbau fixiert und kann nicht mehr aus ihrer Einbauposition fallen. Der Anschlag dient als Anker, der die Dichtungswulst gegen eine axiale Bewegung, in Richtung einer Scheibe, sichert.

In einer weiteren vorteilhaften Ausgestaltung ist zwischen der Dichtungswulst und dem Gehäuseoberteil an der Dichtungswulst, eine erste Rippe, eine zweite Rippe und zwischen der Dichtungswulst und dem Gehäuseunterteil, an der Dichtungswulst eine dritte Rippe und eine vierte Rippe angeordnet. Je zwei Rippen auf einer Seite der Dichtungswulst erhöhen die Aufnahme von Klemmkräften und unterbinden damit oder schränken zumindest ein, dass die Dichtungswulst im Dauerbetrieb eine beschädigende Verhärtung erleidet.

Zusätzlich ist in einer weiteren Ausführungsform die Rippe der Dichtungswulst für ein Aufbringen geringerer Klemmkräfte aus einem elastischen Werkstoff gebildet. Während eines Zuspannvorgangs der Membranventilanordnung, presst das Gehäuseoberteil und das Gehäuseunterteil die Dichtungswulst zusammen. Die zusätzliche Rippe stabilisiert die Dichtungswulst, in dem die zusätzliche Rippe durch eine Verformung Klemmkräfte aufnimmt. Die Anzahl an Verklemmungen der Dichtungswulst zwischen dem Gehäuseoberteil und dem Gehäuseunterteil wird reduziert oder ganz unterbunden. Damit erhöht sich die Lebensdauer der Dichtungswulst.

Darüber hinaus ist die Ventilmembran in einem weiteren Ausführungsbeispiel mit einem nicht funktionalen Bereich der Ventilmembran zwischen dem Vorsprung der Scheibe und dem Gehäuseoberteil verspannt. Dadurch vermindert sich die Kompression der Dichtungswulst, wodurch Spannungen in der Ventilmembran reduziert werden, die zu einer Schädigung der Membranventilanordnung führen können. Der nicht funktionale Bereich der Ventilmembran ist der Bereich der Ventilmembran, der beim Zuspannen der Membranventilanordnung nicht zwischen dem Gehäuseoberteil und dem Gehäuseunterteil angeordnet ist.

In einem weiteren Ausführungsbeispiel führt der Vorsprung der Scheibe die Ventilmembran in ihre Endposition und/oder stabilisiert die Ventilmembran in ihrer Endposition.

Weiterhin nimmt die zusätzlichen Rippe Klemmkräfte auf und verhindert ein verklemmen die Dichtungswulst zwischen dem Gehäuseoberteil und dem Gehäuseunterteil.
Die zusätzliche Rippe gleicht zudem Fertigungstoleranzen des Gehäuseoberteils und/oder des Gehäuseunterteils auf. Ein Kippen und/oder ein Verdrehen der Dichtungswulst in axialer Richtung werden/wird aufgrund der zusätzlichen Rippe unterbunden.

Darüber hinaus stützt sich in einer weiteren vorteilhaften Ausgestaltung die erste Rippe und die zweite Rippe in der Ringnut an dem Gehäuseoberteil ab und die dritte Rippe, sowie die vierte Rippe stützt sich an der radialen Ringfläche des Vorsprungs des Gehäuseunterteils ab. Gegenüber einer Rippe verbessern vier Rippen die Positionierung der Dichtungswulst. Zudem wird das Dichtungsverhalten zwischen dem Gehäuseoberteil und dem Gehäuseunterteil verbessert. Die Anordnung der ersten Rippe und der zweiten Rippe an einer axialen Seite der Dichtungswulst und die Anordnung der dritten Rippe und der vierten Rippe an der gegenüberliegenden Seite der Dichtungswulst ermöglicht ein gleichmäßiges Abdichten in radialer und axialer Richtung.

Außerdem nimmt in einem weiteren Ausführungsbeispiel die thermische Belastung der Dichtungswulst, aufgrund des Verspannens der Ventilmembran zwischen dem Gehäuseoberteil und dem Vorsprung, ab. Während einer Krafteinwirkung auf das Gehäuseoberteil und/oder auf das Gehäuseunterteil wird der Hauptteil der einwirkenden Kraft, aufgrund der Verspannung der Ventilmembran, auf die Ventilmembran abgeleitet. Nur der restliche Teil der einwirkenden Kraft wirkt auf die Dichtungswulst ein, wodurch die thermische Belastung in der Dichtungswulst sinkt.

In einer weiteren vorteilhaften Ausgestaltung weist eine Ventileinheit in einer Druckluft-Bremsanlage mit einer Membranventilanordnung zur Druckmodulation mindestens zwei Membranventilanordnungen in einer Ebene auf. Es hat sich gezeigt, dass mindesten zwei Membranventilanordnungen in einer Ebene Positionierungstoleranzen, die während der Fertigung entstehen, ausgleichen. Außerdem ist die Dichtungskontur weniger anfällig, wodurch die Lebensdauer der Membranventilanordnung erhöht wird.

Nachfolgend werden ausgewählte Ausführungsbeispiele der Erfindung anhand der beigefügten Figuren erläutert.

Es zeigt:
Fig. 1 einen Ausschnitt A einer erfindungsgemäße Ausgestaltung der Dichtungswulst, sowie die Anordnung der Ventilmembran zwischen dem Vorsprung der Scheibe und dem Gehäuseoberteil,
Fig. 1a einen Ausschnitt B mit der Dichtungswulst in einem vertikalen Längsschnitt,
Fig. 2 eine Ausführungsform der Ventileinheit mit der zwei erfindungsgemäßen Membranventilanordnungen in einem vertikalen Längsschnitt.

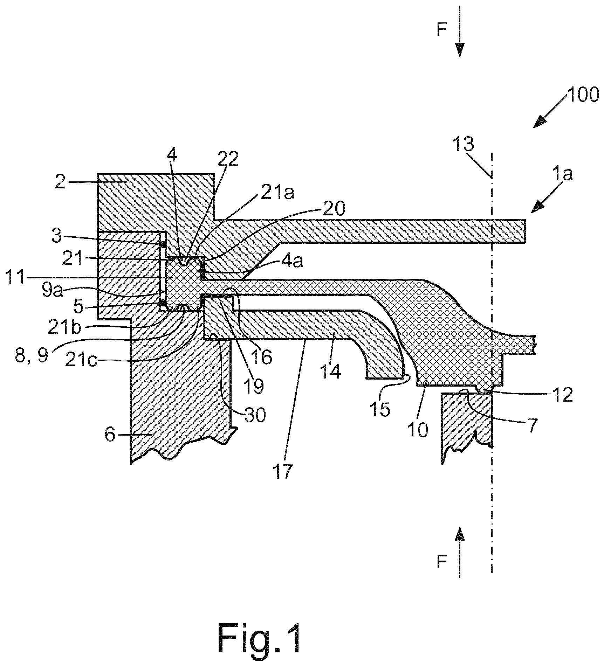

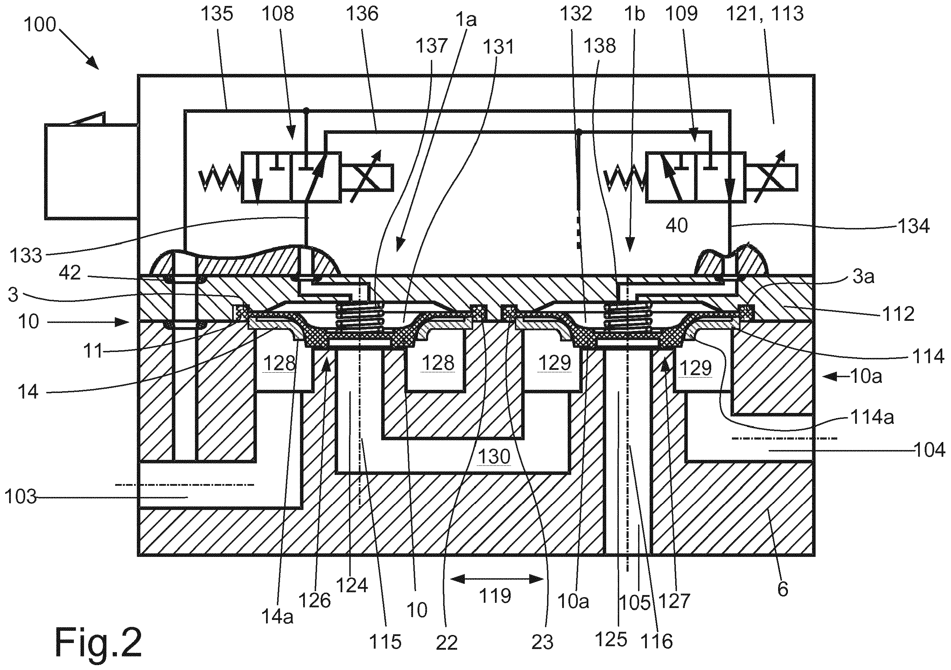

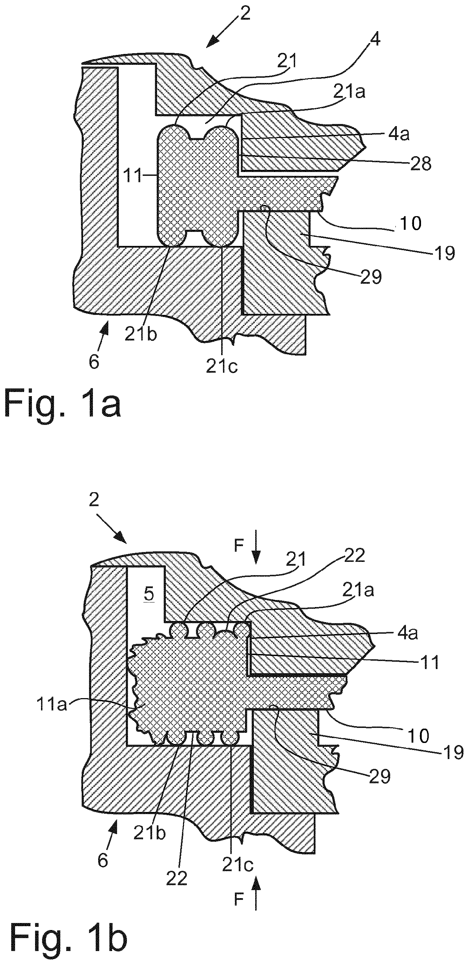

Fig. 1 zeigt einen Ausschnitt einer Ventileinheit 100 nach Fig. 2 mit einer erfindungsgemäßen Membranventilanordnung 1a. Die in Fig. 1 dargestellte Membranventilanordnung 1a weist ein Gehäuseoberteil 2 und ein Gehäuseunterteil 6 auf, welche unter radiales Einklemmen mit einer Ventilmembran 10 und einer die Ventilmembran 10 axial unterstützenden Scheibe 14 zusammengefügt sind. Der Klemmbereich ist durch eine axiale Fläche 16 eines axial an einem der Scheibe 14 angeordneten Vorsprungs 19 und einer radialen Fläche 4a einer L-förmige Aussparung 20 des Gehäuseoberteils 2 gebildet. Damit verringert sich die Spannung in einer Dichtungswulst 11, was zu einer erhöhten Lebensdauer der Dichtungswulst 11 führt. Mit "axial" sei im Folgenden eine Richtung parallel den Betätigungsachsen 115, 116 der Ventilmembran 10, 10a aus Fig. 2 bezeichnet. Entsprechend ist mit dem Ausdruck "radial" eine Richtung quer zu den Betätigungsachsen 115, 116 zu verstehen.

Das Gehäuseunterteil 6 weist ferner radial benachbart zu einer Mittelachse 13 der Membranventilanordnung 1a einen Ventilsitz 7 für eine an der Ventilmembran 10 ausgebildete Dichtlippe 12 auf.

An der Ventilmembran 10 ist axial außen die Dichtungswulst 11 ausgebildet, die in eine axiale Ringnut 3 aufgenommen ist. Die axiale Ringnut 3 ist durch eine radiale Fläche 4 und der Axialfläche 4a der L-förmigen Aussparung 20 des Gehäuseoberteils 2, sowie einer radialen Ringfläche 9 eines ringförmigen radialen Vorsprungs 8 des Gehäuseunterteils 6 und einer axialen ringförmigen Auflagefläche 9a des Gehäuseunterteils 6 gebildet. Die Verschiebung des Klemmsitzes auf dem Klemmbereich, bei der die Ventilmembran 10 eingespannt ist, verringert gegenüber dem genannten Stand der Technik die Krafteinwirkung auf die Dichtungswulst 11 im Ausgangszustand und während der Krafteinwirkung durch Klemmkräfte F der Dichtungswulst 11. Als Ausgangszustand ist der Zustand zu verstehen, bei dem keine Krafteinwirkung durch Klemmkräfte F auf die Gehäuseoberseite 2 und/oder auf die Gehäuseunterseite 6 stattfindet.

Hierbei ist diese Ringnut 3 so bemessen, dass zwischen der axialen Ringfläche 9 und der Dichtungswulst 11 ein Aufnahmeraum 5 vorhanden ist, in welchem bei noch nicht endgültig zusammengefügten Gehäuseteilen 2, 6 kein Material des Dichtungswulstes 11 vorhanden ist.

An der Dichtungswulst 11 sind radial in Richtung des Gehäuseoberteils 2 eine erste Rippe 21 und eine zweite Rippe 21a angeordnet. Auf der gegenüberliegenden Seite der Dichtungswulst 11 sind eine dritte Rippe 21b und eine vierte Rippe 21c an der Dichtungswulst 11 angeordnet. Die Rippen 21, 21a, 21b, 21c füllen den Spielraum 22 zwischen der Dichtungswulst 11 und des Gehäuseoberteils 2 und den Spielraum 22a zwischen der Dichtungswulst 11 und des Gehäuseunterteils 6 auf, welche aufgrund von Fertigungstoleranzen des Gehäuseoberteils 2 und des Gehäuseunterteils 6 vorhanden sind.

Radial zwischen der Ventilmembran 10 und dem Gehäuseunterteil 6 ist die die Ventilmembran 10 unterstützende Scheibe 14 angeordnet, welche eine zur Dichtlippe 12 der Ventilmembran 10 benachbarte zentrische Durchbrechung 15 aufweist. Diese Scheibe 14 liegt mit ihrer komplementären Ringfläche 17 auf einer ringförmigen Auflagefläche 30 des Gehäuseunterteils 6 axial auf.

Sobald das Gehäuseoberteil 2 und das Gehäuseunterteil 6 mit einer Klemmkraft F zusammengefügt und dabei gegeneinander verspannt werden, wird der ursprünglich im Querschnitt weitgehend rechteckig ausgebildete Dichtungswulst 11 in der axialen Ringnut 3 radial zusammengedrückt. Hierbei wird Material des Dichtungswulstes 11 in Richtung des Aufnahmeraumes 5 gedrückt, der durch den verdrängten elastischen Werkstoff 11a erkennbar teilweise ausgefüllt ist. Durch die Rippen 21, 21a, 21b, 21c ist weniger Klemmkraft F erforderlich um den Dichtungswulst zu verspannen.

Hierbei ist der Aufnahmeraum 5 so bemessen ist, dass er auch unter ungünstigen Toleranzbedingungen nicht vollständig durch einen nicht dargestellten verdrängten elastischen Werkstoff 11a des Dichtungswulst 11 ausgefüllt ist. Der verdrängte elastische Werkstoff 11a ist in Fig. 1b gezeigt. Hierdurch wirken auf den Dichtungswulst 11 keine zu hohen Klemmkräfte F, die andernfalls zu einer nachteiligen Verhärtung des elastischen Werkstoffs der Ventilmembran 10 führen könnten. Durch die geschilderte Ausbildung des Aufnahmeraumes 5 in der Ringnut 3 und durch den dort hinein gedrückten elastischen Werkstoff 11a des Dichtungswulstes 11 ist eine axiale Verlängerung der wirksamen Dichtfläche des Dichtungswulstes 11 vorteilhaft erreicht worden, wodurch eine zusätzliche radiale Dichtungsanordnung gebildet ist, welche zu einer insgesamt verbesserten Abdichtung führt.

Fig. 1a zeigt einen Detailausschnitt der Dichtungswulst 11. Die Dichtungswulst 11 befindet sich im Ausgangszustand. Zum einen ist noch einmal verdeutlicht, wie die Rippen 21, 21a sich an dem Gehäuseoberteil 2 und die Rippen 21b, 21c sich an dem Gehäuseunterteil 6 abstützen und die Dichtungswulst 11 gegen ein verdrehen in radialer Richtung verhindern. Die der Scheibe 14 zugewandten axiale Fläche 28 der Dichtungswulst 11, stützt sich gegen ein verrutschen und/oder verdrehen an einer der Dichtungswulst 11 zugewandten radialen Fläche 29 des Vorsprungs 19 der Scheibe 14 und der Axialfläche 4a des Gehäuseoberteils 2 ab.

Des Weiteren ist in Fig. 1b noch ein Detailausschnitt der Dichtungswulst 11 gezeigt. In Fig. 1b befindet sich die Dichtungswulst 11 jedoch unter einer Krafteinwirkung. Dabei sind das Gehäuseoberteil 2 und das Gehäuseunterteil 6 durch Einwirken der Klemmkraft F zusammengepresst. Das Material der Dichtungswulst 11 füllt den Aufnahmeraum 5 auf. Das verdrängte Material ist als verdrängter, elastischer Werkstoff 11a der Dichtungswulst 11 dargestellt. Die Rippen 21, 21a füllen hingegen den Spielraum 22 zwischen dem Gehäuseoberteil 2 und der Dichtungswulst 11. Die Rippen 21b, 21c füllen hingegen den Spielraum 22a zwischen dem Gehäuseunterteil 6 und der Dichtungswulst 11.

In Fig. 2 sind zwei erfindungsgemäße Membranventilanordnungen 1a, 1b in der weitgehend bekannten Ventileinheit 100 gezeigt. Die Membranventilanordnung 1b ist bauteilgleich mit der Membranventilanordnung 1a. Die Membranventilanordnungen 1a, 1b sind in einer Ebene angeordnet. In der Ventileinheit 100 sind ein Bremsdruckeingang 103, ein Bremsdruckausgang 104, ein Entlüftungsausgang 105, sowie ein als Einlassventil ausgebildete Membranventilanordnung 1a, ein als Auslassventil ausgebildete Membranventilanordnung 1b und jeweils ein als 3/2-Wege-Magnetventil ausgebildetes Vorsteuerventil 108, 109 für jede Membranventilanordnung 1a, 1b angeordnet. Die Ventileinheit 100 ist in ein Gehäuseunterteil 6 und einen Gehäusedeckel 112 unterteilt. Der Gehäusedeckel 112 umfasst eine die Magnetventile 108, 109 enthaltende Steuereinheit 113 und eine zwischen dem Gehäuseunterteil 6 und der Steuereinheit 113 angeordnete Gehäuseoberteil 121. Die Steuereinheit 113 und das Gehäuseoberteil 121 können miteinander verschraubt, verrastet oder in anderer Weise miteinander verbunden sein. Der aus der Steuereinheit 113 und dem Gehäuseoberteil 121 gebildete Gehäusedeckel 112 kann einheitlich mit dem Gehäuseunterteil 6 verbunden, insbesondere verschraubt sein. Es ist jedoch auch möglich, dass die Steuereinheit 113 und das Gehäuseoberteil 121 separat mit dem Gehäuseunterteil 6 verbunden sind.

Der Bremsdruckeingang 103 und der Bremsdruckausgang 104 sind in Längsrichtung 119 der Ventileinheit 100 mit horizontaler Ausrichtung weitgehend axial gegenüberliegend und der Entlüftungsausgang 105 dazwischen vertikal nach unten gerichtet in dem gehäuseunterteil 6 angeordnet. Die beiden Membranventilanordnungen 1a, 1b sind in dem Gehäuseunterteil 6 zwischen dem Bremsdruckeingang 103 und dem Bremsdruckausgang 104 mit parallelen Betätigungsachsen 115, 116 in Längsrichtung 119 hintereinander angeordnet. Das Ventilmembran 10 der Membranventilanordnung 1a und ein Ventilmembran 10a der Membranventilanordnung 1b sind in einer gemeinsamen zwischen dem Gehäuseunterteil 6 und dem Gehäuseoberteil 2 entsprechenden Membranebene angeordnet sowie über jeweils einen in die gehäuseseitige Ringnut 3 eingelegten, axial vorsteuerventilseitig ausgerichteten Dichtungswulst 11, sowie einer gehäuseseitigen Ringnut 3a eingelegten, axial vorsteuerventilseitig ausgerichteten Dichtungswulst 23 zwischen dem Gehäuseunterteil 6 und dem Gehäuseoberteil 2 eingespannt. Die Scheibe 14 der Membranventilanordnung 1a und die Scheibe 114 der Membranventilanordnung 1b führen und stützen die Ventilmembrane 10, 10a. Wie die Scheibe 14, so weist auch die Scheibe 114 eine zentrische Durchbrechung 114a auf. Die in Fig. 1 nur schematisch dargestellten Vorsteuerventile 108, 109 sind vollständig in der Steuereinheit 113 des Gehäuseoberteils 2 angeordnet.

Die Membranventilanordnungen 1a, 1b weisen innerhalb des Gehäuseunterteils 6 koaxial zu den Betätigungsachsen 115, 116 jeweils einen zylindrischen Zentralkanal 124, 125 mit einem der Ventilmembran 10 oder einer Ventilmembran 10a zugewandten kreisrunden Ventilsitz 126, 127 und einen konzentrisch dazu angeordneten radial äußeren Ringkanal 128, 129 auf. Der Ringkanal 128 des Membranventilanordnung 1a ist unmittelbar mit dem Bremsdruckeingang 103 verbunden. Der Zentralkanal 124 der Membranventilanordnung 1a steht über einen Verbindungskanal 130 mit dem Ringkanal 129 der Membranventilanordnung 1b in Verbindung, der seinerseits unmittelbar mit dem Bremsdruckausgang 104 in Verbindung steht. Der Zentralkanal 125 der Membranventilanordnung 1b ist unmittelbar mit dem Entlüftungsausgang 105 verbunden.

Auf der dem Gehäusedeckel 112 axial zugewandten Außenseite der Ventilmembranen 10, 10a ist jeweils eine Steuerkammer 131, 132 ausgebildet, in die jeweils mittig eine Steuerdruckleitung 133, 134 einmündet. Über die Steuerdruckleitungen 133, 134 sind die Steuerkammern 131, 132 der Membranventilanordnungen 1a, 1b durch das jeweils zugeordnete Vorsteuerventil 108, 109 wechselweise mit einem über eine Steuerdruckleitung 135 am Bremsdruckeingang 103 entnommenen hohen Steuerdruck oder mit einem über eine Steuerdruckleitung 136 am Entlüftungsausgang 105 oder an anderer Stelle entnommenen, dem Umgebungsdruck entsprechenden niedrigen Steuerdruck beaufschlagbar.

Durch jeweils eine in jeder Steuerkammer 131, 132 angeordnete Ventilfeder 137, 138 werden die Ventilmembranen 10, 10a im lastfreien Ruhezustand der Ventileinheit 100 gegen den zugeordneten Ventilsitz 126, 127 gedrückt, was dem geschlossenen Zustand der Membranventilanordnungen 1a, 1b entspricht. Bei Beaufschlagung der jeweiligen Steuerkammer 131, 132 mit dem hohen Steuerdruck wird die betreffende Ventilmembran 10, 10a auf den zugeordneten Ventilsitz 126, 127 gedrückt, wodurch die betreffende Membranventilanordnung 1a, 1b belastbar geschlossen ist. Bei einer Beaufschlagung der jeweiligen Steuerkammer 131, 132 mit dem niedrigen Steuerdruck kann die betreffende Ventilmembran 117, 118 durch den in den angrenzenden zylindrischen Zentralkanälen 124, 125 und den Strömungskanälen 128, 129 vorliegenden Bremsdruck von dem Ventilsitz 126, 127 weggedrückt werden, wodurch die betreffende Membranventilanordnung 1a, 1b geöffnet ist.

Die Ventileinheit 100 weist die Schaltfunktionen "Druck erhöhen", "Druck halten" und "Druck absenken" auf. In der Schaltfunktion "Druck erhöhen" ist die Membranventilanordnung 1a geöffnet und die Membranventilanordnung 1b geschlossen, so dass der über ein Bremsventil oder ein Relaisventil an dem Bremsdruckeingang 103 eingesteuerte Bremsdruck unverändert an den Bremsdruckausgang 104 sowie an den daran angeschlossenen Bremskreis oder Radbremszylinder weitergeleitet wird. Da die Schaltfunktion "Druck erhöhen" dem Ruhezustand der Ventileinheit 100 entspricht, verbindet das Vorsteuerventil 108 der Membranventilanordnung 1a im unbestromten Zustand seiner Magnetspule die Steuerkammer 131 der Membranventilanordnung 1a mit der den niedrigen Steuerdruck führenden Steuerdruckleitung 136. Ebenso verbindet das Vorsteuerventil 109 der Membranventilanordnung 1b im unbestromten Zustand seiner Magnetspule die Steuerkammer 132 der Membranventilanordnung 1b mit der den hohen Steuerdruck führenden Steuerdruckleitung 135.

In der Schaltfunktion "Druck halten" der Ventileinheit 100 sind die der Membranventilanordnung 1a und die Membranventilanordnung 1b geschlossen, so dass der am Bremsdruckausgang 104 und dem daran angeschlossenen Bremskreis oder Radbremszylinder anliegende Bremsdruck konstant gehalten wird. Zur Einstellung dieser Schaltfunktion wird nur das Vorsteuerventil 108 der Membranventilanordnung 1a durch Bestromung seiner Magnetspule umgeschaltet und damit die Steuerkammer 131 der Membranventilanordnung 1a mit dem hohen Steuerdruck beaufschlagt.

In der Schaltfunktion "Druck absenken" der Ventileinheit 100 sind die Membranventilanordnung 1a geschlossen und die Membranventilanordnung 1b geöffnet, so dass der Bremsdruckausgang 104 und der daran angeschlossene Bremskreis oder Radbremszylinder dann entlüftet werden. Zur Einstellung dieser Schaltfunktion werden beide Vorsteuerventile 108, 109 durch Bestromung ihrer Magnetspulen umgeschaltet und damit die Steuerkammer 131 der Membranventilanordnung 1a mit dem hohen Steuerdruck und die Steuerkammer 132 der Membranventilanordnung 1b mit dem niedrigen Steuerdruck beaufschlagt.

Die Schaltfunktionen "Druck halten" und "Druck absenken" der Ventileinheit 100 sind auch Blockierschutzfunktionen, mit denen bei einer Verwendung der Ventileinheit 100 als ABS-Regelventil eine Antiblockiersystems ein bremsbedingtes Blockieren des zugeordneten Rades verhindert werden kann. Die Blockierschutzfunktionen werden durch eine entsprechende Ansteuerung der Vorsteuerventile von einem ABS-Steuergerät gesteuert, in dem die Signale von Raddrehzahlsensoren zur Erkennung eines bevorstehenden oder schon eingetretenen Blockierens der gebremsten Räder ausgewertet werden.

### Bezugszeichenliste (Bestandteil der Beschreibung)

- 1a, 1b: Membranventilanordnung
- 2: Gehäuseoberteil
- 3: Ringnut der Membranventilanordnung 1a
- 3a: Ringnut der Membranventilanordnung 1b
- 4: Radiale Fläche am Gehäuseoberteil 2
- 4a: Axialfläche am Gehäuseoberteil 2
- 5: Aufnahmeraum
- 6: Gehäuseunterteil
- 7: Ventilsitz am Gehäuseunterteil 6
- 8: ringförmiger radialer Vorsprung am Gehäuseunterteil 6
- 9: radiale Ringfläche am Vorsprung 8 des Gehäuseunterteils 6
- 9a: axiale Ringfläche am Vorsprung 8 des Gehäuseunterteils 6
- 10: Ventilmembran der Membranventilanordnung 1a
- 10a: Ventilmembran der Membranventilanordnung 1b
- 11: Dichtungswulst an der Ventilmembran 10
- 11 a: Verdrängter, elastischer Werkstoff des Dichtungswulstes 11
- 12: Dichtlippe an der Ventilmembran 10
- 13: Mittelachse der Membranventilanordnung
- 14: Die Ventilmembran 10 unterstützende Scheibe
- 14a: Komplementäre Ringfläche der Scheibe 14
- 15: Zentrische Durchbrechung in der Scheibe 14
- 16: radiale Fläche des Vorsprungs 19
- 17: Ringfläche der Scheibe 14
- 19: Vorsprung der Scheibe 4
- 20: L-förmige Aussparung des Gehäuseoberteils 2
- 21: erste Rippe der Dichtungswulst 11
- 21a: zweite Rippe der Dichtungswulst 11
- 21b: dritte Rippe der Dichtungswulst 11
- 21c: vierte Rippe der Dichtungswulst 11
- 22: Spielraum zwischen der Dichtungswulst 11 und dem Gehäuseoberteil 2
- 22a: Spielraum zwischen der Dichtungswulst 11 und dem Gehäuseunterteil 6
- 23: Dichtungswulst der Ventilmembran 1b
- 28: axiale Fläche der Dichtungswulst 11
- 29: radiale Fläche des Vorsprungs 19
- 30: ringförmige Auflagefläche des Gehäuseunterteils 6
- 100: Ventileinheit
- 103: Bremsdruckeingang
- 104: Bremsdruckausgang
- 105: Entlüftungsausgang
- 108: Vorsteuerventil der Membranventilanordnung 1a
- 109: Vorsteuerventil der Membranventilanordnung 1b
- 110: Teilungsebene
- 112: Gehäusedeckel
- 113: Steuereinheit
- 114: Scheibe der Membranventileinrichtung 1b
- 114a: Zentrische Durchbrechung der Scheibe 114
- 115: Betätigungsachse der Membranventilanordnung 1a
- 116: Betätigungsachse der Membranventilanordnung 1b
- 119: Längsrichtung des Ventilgehäuses
- 121: Gehäuseoberteil
- 124: zylindrischer Zentralkanal der Membranventilanordnung 1a
- 125: zylindrischer Zentralkanal der Membranventilanordnung 1b
- 126: Ventilsitz der Membranventilanordnung 1a
- 127: Ventilsitz der Membranventilanordnung 1a
- 128: Strömungskanal der Membranventilanordnung 1a
- 129: Strömungskanal der Membranventilanordnung 1b
- 131: Steuerkammer der Membranventilanordnung 1a
- 132: Steuerkammer der Membranventilanordnung 1b
- 133: Steuerdruckleitung von der Membranventilanordnung 1a zum Vorsteuerventil 108 der Membranventilanordnung 1a
- 134: Steuerdruckleitung von der Membranventilanordnung 1b zum Vorsteuerventil 109 der Membranventilanordnung 1b
- 135: Steuerdruckleitung u.a. zur Verbindung des Vorsteuerventils 108 mit dem Vorsteuerventil 109
- 136: Steuerdruckleitung vom Vorsteuerventil 108 zum Vorsteuerventil 109
- F: Klemmkraft

## Patentansprüche

1. Membranventilanordnung (1a, 1b), für eine Ventileinheit (100) eines pneumatischen Bremssystems eines Kraftfahrzeugs, aufweisend eine aus einem elastischen Werkstoff bestehende scheibenförmige Ventilmembran (10, 10a) sowie eine Scheibe (14, 114) mit einer zentrischen Durchbrechung (15, 114a), wobei die Ventilmembran (10, 10a) mit einer ihrer beiden Seiten auf der Scheibe (14, 114) angeordnet ist, wobei die Ventilmembran (10, 10a) radial außen einen um laufenden Dichtungswulst (11, 111) aufweist, wobei die Scheibe (14, 114) zusammen mit der Ventilmembran (10, 10a) zwischen einem Gehäuseoberteil (2, 121) und einem Gehäuseunterteil (6) der Membranventilanordnung (1, 1b) angeordnet ist und die Dichtungswulst (11, 111) zwischen dem Gehäuseoberteil (2, 121) und dem Gehäuseunterteil (6) aufgenommen ist, wobei die Dichtungswulst (11, 111) der Ventilmembran (10, 10a) axial in Richtung des Gehäuseoberteils (2, 121) und/oder in Richtung des Gehäuseunterteils (6) mindestens eine Rippe (21, 21a, 21b, 21c) aufweist, wobei die Dichtungswulst (11, 111) der Ventilmembran (10, 10a) in eine Ringnut (3, 3a) aufgenommen ist, welche durch eine L-förmige Aussparung (20) im Gehäuseoberteil (2, 121) und einem diesen radial umfassenden, ringförmigen, radialer Vorsprung (8) des Gehäuseunterteils (6) gebildet ist und die Ventilmembran (10, 10a) zwischen dem Gehäuseoberteil (2) und der Scheibe (14, 114) gehalten ist, **dadurch gekennzeichnet, dass** die Scheibe (14, 114) radial in Richtung der Ventilmembran (10, 10a) einen Vorsprung (19) zum Verspannen der Ventilmembran (10, 10a) zwischen dem Gehäuseoberteil (6) und der Scheibe (14, 114) aufweist.

2. Membranventilanordnung (1a, 1b) nach Anspruch 1, **dadurch gekennzeichnet, dass** der ringförmige radiale Vorsprung (8) des Gehäuseunterteils (6) wenigstens eine radiale Ringfläche (9) sowie eine axiale Ringfläche (9a) aufweist, dass der radiale Vorsprung (8) des Gehäuseunterteils (6) im Bereich der axialen Ringfläche (9a) einen Aufnahmeraum (5) bildet, welcher ohne radiale Krafteinwirkung auf das Gehäuseoberteil (2, 121) und/oder das Gehäuseunterteil (6) von der Dichtungswulst (11, 111) nicht ausgefüllt ist, und dass nach dem Verspannen des Gehäuseoberteils (2, 121) gegen das Gehäuseunterteil (6) in den Aufnahmeraum (5) verdrängter elastischer Werkstoff (11a) des Dichtungswulstes (11, 111) der Ventilmembran (10, 10a) angeordnet ist, wobei der Aufnahmeraum (5) und der dort hinein verdrängte Werkstoff (11a) des Dichtungswulstes (11, 111) eine zusätzliche axiale Dichtungsanordnung bilden.

3. Membranventilanordnung (1a, 1b) nach Anspruch 1, **dadurch gekennzeichnet, dass** der Vorsprung (19) dazu ausgebildet ist, die Ventilmembran (10, 10a), während der Montage der Ventilmembran (10, 10a), in die Membranventilanordnung (1a, 1b) zu führen.

4. Membranventilanordnung (1a, 1b) nach einem der vorangegangenen Ansprüche, **dadurch gekennzeichnet, dass** zwischen der Dichtungswulst (11, 111) und dem Gehäuseoberteil (2), an der Dichtungswulst (11, 111), eine erste Rippe (21), eine zweite Rippe (21a) und zwischen der Dichtungswulst (11, 111) und dem Gehäuseunterteil (6), an der Dichtungswulst (11, 111) eine dritte Rippe (21b) und eine vierte Rippe (21c) angeordnet sind.

5. Membranventilanordnung (1a, 1b) nach einem der vorangegangenen Ansprüche, **dadurch gekennzeichnet, dass** die Rippe (21, 21a, 21b, 21c) der Dichtungswulst (11, 111) für ein Aufbringen geringerer Klemmkräfte (F) aus einem elastischen Werkstoff gebildet ist.

6. Verfahren zur Montage einer Membranventilanordnung (1a, 1b) nach einem der Ansprüche 1 bis 5 in einer Ventileinheit (100) eines pneumatischen Bremssystems eines Kraftfahrzeugs, **dadurch gekennzeichnet, dass** die Ventilmembran (10, 10a) mit einem nicht funktionalen Bereich der Ventilmembran (10, 10a) zwischen dem Vorsprung (19) der Scheibe (14, 114) und dem Gehäuseoberteil (2, 121) verspannt wird.

7. Verfahren zur Montage einer Membranventilanordnung (1a, 1b) nach Anspruch 6, **dadurch gekennzeichnet, dass** der Vorsprung (19) der Scheibe (14, 114) die Ventilmembran (10, 10a) in ihre Endposition führt und/oder stabilisiert.

8. Verfahren zur Montage einer Membranventilanordnung (1a, 1b) nach einem der Ansprüche 6 oder 7, **dadurch gekennzeichnet, dass** die zusätzlichen Rippe (21, 21a, 21b 21c), Klemmkräfte (F) aufnimmt und ein verklemmen die Dichtungswulst (11, 111) zwischen dem Gehäuseoberteil (2, 121) und dem Gehäuseunterteil (6) verhindert.

9. Verfahren zur Montage einer Membranventilanordnung (1a, 1b) nach einem der Ansprüche 6 bis 8, **dadurch gekennzeichnet, dass** sich die erste Rippe (21) und die zweite Rippe (21a) in der Ringnut (3, 3a), an dem Gehäuseoberteil (2, 121) abstützt und die dritte Rippe (21b) und die vierte Rippe (21c) sich an der radiale Ringfläche (9a) des Gehäuseunterteils (6) abstützt.

10. Verfahren zur Montage einer Membranventilanordnung (1a, 1b) nach einem der Ansprüche 6 bis 9, **dadurch gekennzeichnet, dass** die thermische Belastung der Ventilmembran (10, 10a), aufgrund des Verspannens der Ventilmembran (10, 10a) zwischen dem Gehäuseoberteil (2, 121) und dem Vorsprung (19) abnimmt.

11. Ventileinheit (100) zur Druckmodulation in einer Druckluft-Bremsanlage mit einer Membranventilanordnung (1a, 1b) nach einem der Ansprüche 1 bis 5, **dadurch gekennzeichnet, dass** die Ventileinheit (100) zur Druckmodulation mindestens zwei Membranventilanordnungen (1a, 1b) in einer Ebene aufweist.

## Claims

1. Membrane valve assembly (1a, 1b) for a valve unit (100) of a pneumatic brake system of a motor vehicle, comprising a disk-shaped valve membrane (10, 10a) consisting of an elastic material as well as a disk (14, 114) with a central aperture (15, 114a), wherein the valve membrane (10, 10a) is arranged with one of its two sides on the disk (14, 114), wherein the valve membrane (10, 10a) has, radially outward, a peripheral sealing bead (11, 111), wherein the disk (14, 114) is arranged together with the valve membrane (10, 10a) between a housing upper part (2, 121) and a housing lower part (6) of the membrane valve assembly (1, 1b) and the sealing bead (11, 111) is received between the housing upper part (2, 121) and the housing lower part (6), wherein the sealing bead (11, 111) of the valve membrane (10, 10a) has at least one rib (21, 21a, 21b, 21c) axially in the direction of the housing upper part (2, 121) and/or in the direction of the housing lower part (6), wherein the sealing bead (11, 111) of the valve membrane (10, 10a) is received in an annular groove (3, 3a), which is formed by an L-shaped notch (20) in the housing upper part (2, 121) and an annular, radial protrusion (8) of the housing lower part (6) radially encompassing it and the valve membrane (10, 10a) is held between the housing upper part (2) and the disk (14, 114), **characterized in that** the disk (14, 114) comprises radially in the direction of the valve membrane (10, 10a) a protrusion (19) for bracing the valve membrane (10, 10a) between the housing upper part (6) and the disk (14, 114).

2. The membrane valve assembly (1a, 1b) according to claim 1, **characterized in that** the annular radial protrusion (8) of the housing lower part (6) comprises at least one radial annular surface (9) as well as an axial annular surface (9a), **in that** the radial protrusion (8) of the housing lower part (6) in the region of the axial annular surface (9a) forms an accommodating space (5), which without the application of radial force on the housing upper part (2, 121) and/or the housing lower part (6) is not filled by the sealing bead (11, 111), and **in that** after the bracing of the housing upper part (2, 121) elastic material (11a) of the sealing bead (11, 111) of the valve membrane (10, 10a) displaced against the housing lower part (6) is arranged in the accommodating space (5), wherein the accommodating space (5) and the material (11a) of the sealing bead (11, 111) displaced there form an additional axial sealing arrangement.

3. The membrane valve assembly (1a, 1b) according to claim 1, **characterized in that** the protrusion (19) is configured to guide the valve membrane (10, 10a) during the installation of the valve membrane (10, 10a) into the membrane valve assembly (1a, 1b).

4. The membrane valve assembly (1a, 1b) according to any of the preceding claims, **characterized in that** a first rib (21), a second rib (21a) are arranged on the sealing bead (11, 111) between the sealing bead (11, 111) and the housing upper part (2) and a third rib (21b) and a fourth rib (21c) are arranged on the sealing bead (11, 111) between the sealing bead (11, 111) and the housing lower part (6).

5. The membrane valve assembly (1a, 1b) according to any of the preceding claims, **characterized in that** the rib (21, 21a, 21b, 21c) of the sealing bead (11, 111) is formed from an elastic material for an application of slight clamping forces (F).

6. A method for installation of a membrane valve assembly (1a, 1b) according to any of claims 1 to 5 in a valve unit (100) of a pneumatic braking system of a motor vehicle, **characterized in that** the valve membrane (10, 10a) is braced with a non-functional region of the valve membrane (10, 10a) between the protrusion (19) of the disk (14, 114) and the housing upper part (2, 121).

7. The method for installation of a membrane valve assembly (1a, 1b) according to claim 6, **characterized in that** the protrusion (19) of the disk (14, 114) guides the valve membrane (10, 10a) to its end position and/or stabilizes it.

8. The method for installation of a membrane valve assembly (1a, 1b) according to any of claims 6 or 7, **characterized in that** the additional rib (21, 21a, 21b, 21c), absorbs clamping forces (F) and prevents a clamping of the sealing bead (11, 111) between the housing upper part (2, 121) and the housing lower part (6).

9. The method for installation of a membrane valve assembly (1a, 1b) according to any of claims 6 to 8, **characterized in that** the first rib (21) and the second rib (21a) are supported on the housing upper part (2, 121) in the annular groove (3, 3a) and the third rib (21b) and the fourth rib (21c) are supported on the radial annular surface (9a) of the housing lower part (6).

10. The method for installation of a membrane valve assembly (1a, 1b) according to any of claims 6 to 9, **characterized in that** the thermal load of the valve membrane (10, 10a), due to the bracing of the valve membrane (10, 10a) decreases between the housing upper part (2, 121) and the protrusion (19) .

11. A valve unit (100) for pressure modulation in a compressed air braking system having a membrane valve assembly (1a, 1b) according to any of claims 1 to 5, **characterized in that** the valve unit (100) has at least two membrane valve assemblies (1a, 1b) on a plane for pressure modulation.

## Revendications

1. Ensemble soupape à membrane (1a, 1b) pour une unité soupape (100) d'un système de freinage pneumatique d'un véhicule à moteur, présentant une membrane de soupape (10, 10a) en forme de disque constituée d'un matériau élastique ainsi qu'un disque (14, 114) avec une traversée centrale (15, 114a), dans lequel la membrane de soupape (10, 10a) est disposée avec une de ses deux faces sur le disque (14, 114), dans lequel la membrane de soupape (10, 10a) présente radialement à l'extérieur un bourrelet d'étanchéité (11, 111) périphérique, dans lequel le disque (14, 114) est disposé conjointement avec la membrane de soupape (10, 10a) entre une partie supérieure de carter (2, 121) et une partie inférieure de carter (6) de l'ensemble soupape à membrane (1, 1b) et le bourrelet d'étanchéité (11, 111) est reçu entre la partie supérieure de carter (2, 121) et la partie inférieure de carter (6), dans lequel le bourrelet d'étanchéité (11, 111) de la membrane de soupape (10, 10a) présente axialement en direction de la partie supérieure de carter (2, 121) et/ou en direction de la partie inférieure de carter (6) au moins une nervure (21, 21a, 21b, 21c), dans lequel le bourrelet d'étanchéité (11, 111) de la membrane de soupape (10, 10a) est reçu dans une rainure annulaire (3, 3a), laquelle est formée par un évidement (20) en forme de L dans la partie supérieure de carter (2, 121) et une partie saillante radiale (8), annulaire, entourant celle-ci radialement de la partie inférieure de carter (6) et la membrane de soupape (10, 10a) est retenue entre la partie supérieure de carter (2) et le disque (14, 114), **caractérisé en ce que** le disque (14, 114) présente radialement en direction de la membrane de soupape (10, 10a) une partie saillante (19) pour la mise en tension de la membrane de soupape (10, 10a) entre la partie supérieure de carter (6) et le disque (14, 114).

2. Ensemble soupape à membrane (1a, 1b) selon la revendication 1, **caractérisé en ce que** la partie saillante radiale (8) annulaire de la partie inférieure de carter (6) présente au moins une surface annulaire radiale (9) ainsi qu'une surface annulaire axiale (9a), que la partie saillante radiale (8) de la partie inférieure de carter (6) forme dans la zone de la surface annulaire axiale (9a) un espace de réception (5), lequel sans action de force radiale sur la partie supérieure de carter (2, 121) et/ou la partie inférieure de carter (6) n'est pas rempli par le bourrelet d'étanchéité (11, 111), et que, après la mise en tension de la partie supérieure de carter (2, 121) contre la partie inférieure de carter (6), un matériau (11a) élastique repoussé du bourrelet d'étanchéité (11, 111) de la membrane de soupape (10, 10a) est disposé dans l'espace de réception (5), dans lequel l'espace de réception (5) et le matériau (11a) du bourrelet d'étanchéité (11, 111) repoussé à l'intérieur à cet endroit forment un ensemble d'étanchéité axiale additionnel.

3. Ensemble soupape à membrane (1a, 1b) selon la revendication 1, **caractérisé en ce que** la partie saillante (19) est réalisée pour guider la membrane de soupape (10, 10a), pendant le montage de la membrane de soupape (10, 10a), dans l'ensemble soupape à membrane (1a, 1b).

4. Ensemble soupape à membrane (1a, 1b) selon l'une quelconque des revendications précédentes, **caractérisé en ce qu'**une première nervure (21), une deuxième nervure (21a) sont disposées entre le bourrelet d'étanchéité (11, 111) et la partie supérieure de carter (2), sur le bourrelet d'étanchéité (11, 111), et une troisième nervure (21b) et une quatrième nervure (21c) sont disposées sur le bourrelet d'étanchéité (11, 111) entre le bourrelet d'étanchéité (11, 111) et la partie inférieure de carter (6).

5. Ensemble soupape à membrane (1a, 1b) selon l'une quelconque des revendications précédentes, **caractérisé en ce que** la nervure (21, 21a, 21b, 21c) du bourrelet d'étanchéité (11, 111), pour une application de forces de serrage (F) moindres, est formée d'un matériau élastique.

6. Procédé pour le montage d'un ensemble soupape à membrane (1a, 1b) selon l'une quelconque des revendications 1 à 5, dans une unité soupape (100) d'un système de freinage pneumatique d'un véhicule à moteur, **caractérisé en ce que** la membrane de soupape (10, 10a) est mise en tension avec une zone non fonctionnelle de la membrane de soupape (10, 10a) entre la partie saillante (19) du disque (14, 114) et la partie supérieure de carter (2, 121) .

7. Procédé pour le montage d'un ensemble soupape à membrane (1a, 1b) selon la revendication 6, **caractérisé en ce que** la partie saillante (19) du disque (14, 114) guide et/ou stabilise la membrane de soupape (10, 10a) dans sa position finale.

8. Procédé pour le montage d'un ensemble soupape à membrane (1a, 1b) selon l'une quelconque des revendications 6 ou 7, **caractérisé en ce que** la nervure (21, 21a, 21b, 21c) additionnelle reçoit des forces de serrage (F) et empêche un coincement du bourrelet d'étanchéité (11, 111) entre la partie supérieure de carter (2, 121) et la partie inférieure de carter (6) .

9. Procédé pour le montage d'un ensemble soupape à membrane (1a, 1b) selon l'une quelconque des revendications 6 à 8, **caractérisé en ce que** la première nervure (21) et la deuxième nervure (21a) s'appuient dans la rainure annulaire (3, 3a) sur la partie supérieure de carter (2, 121) et la troisième nervure (21b) et la quatrième nervure (21c) s'appuient sur la surface annulaire radiale (9a) de la partie inférieure de carter (6).

10. Procédé pour le montage d'un ensemble soupape à membrane (1a, 1b) selon l'une quelconque des revendications 6 à 9, **caractérisé en ce que** la sollicitation thermique de la membrane de soupape (10, 10a) diminue en raison de la mise en tension de la membrane de soupape (10, 10a) entre la partie supérieure de carter (2, 121) et la partie saillante (19).

11. Unité soupape (100) pour la modulation de pression dans une installation de freinage à air comprimé avec un ensemble soupape à membrane (1a, 1b) selon l'une quelconque des revendications 1 à 5, **caractérisée en ce que** l'unité soupape (100) présente pour la modulation de pression au moins deux ensembles soupape à membrane (1a, 1b) dans un plan.
